# EUROPÄISCHE PATENTSCHRIFT

(11) **EP 2 314 528 B1**
(45) Veröffentlichungstag und Bekanntmachung des Hinweises auf die Patenterteilung: **26.03.2014**
(21) Anmeldenummer: 10009741.9
(22) Anmeldetag: 16.09.2010
(51) Int. Cl.: B65G 23/10, B65G 23/44, B65G 43/02

(54) **Kettenförderer mit Dämpfungsvorrichtung**
Chain conveyor with damping device
Convoyeur à chaîne doté d'un dispositif d'amortissement

(30) Priorität: 23.10.2009 DE 102009050488
(43) Veröffentlichungstag der Anmeldung: 27.04.2011
(73) Patentinhaber: Robert Bosch GmbH, 70442 Stuttgart (DE)
(72) Erfinder: Lenord, Oliver, 63739 Aschaffenburg (DE); Chen, Yongbo, 97816 Lohr am Main (DE)
(74) Vertreter: Maiß, Harald

(56) Entgegenhaltungen:
- DE-U1-202008 014 206
- GB-A- 424 504

## Beschreibung

Die Erfindung betrifft einen Förderer gemäß dem Oberbegriff von Anspruch 1.

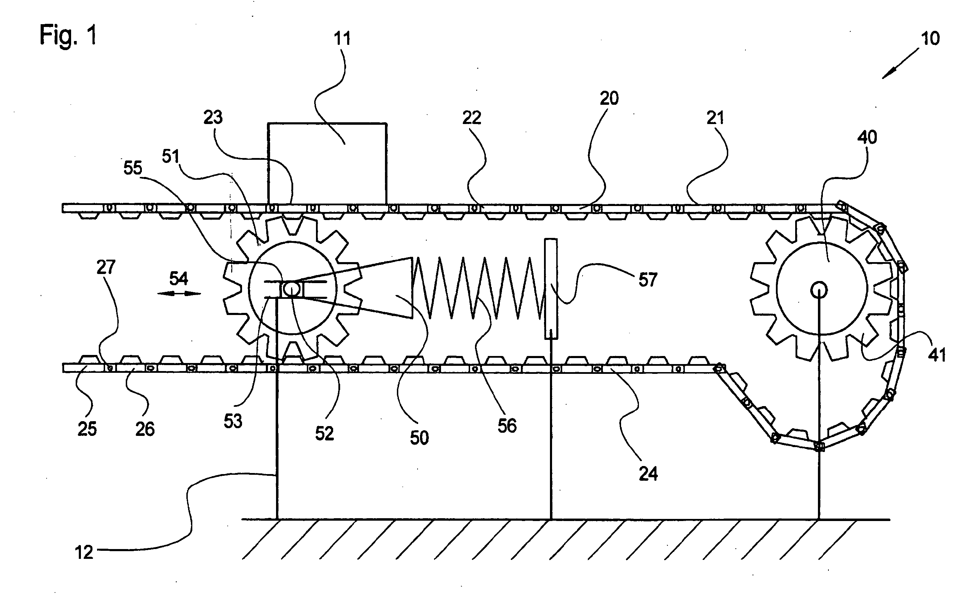

Aus der SU 1 488 216 A1 ist ein Förderer bekannt. Gemäß der Fig. 1 der SU 1 488 216 A1 umfasst der Förderer mehrere endlose Fördermittel in Form von Laschenketten. Die Fördermittel besitzen einen Förderabschnitt mit einer Förderfläche, auf der Fördergüter 7, 8 transportiert werden können. Das Fördergut wird hierbei reibschlüssig von dem Fördermittel mitgenommen. Das endlose Fördermittel wird über mehrere drehbare Umlenkrollen 3, 4, 5 an einem Grundgestell 1 gehalten, so dass es endlos umlaufen kann. Gemäß der Fig. 2 der SU 1 488 216 A1 ist ein Mitnehmerrad 12 mit einer Drehachse 11 vorgesehen, das mit dem Fördermittel derart gekoppelt ist, dass es von diesem in eine Drehbewegung versetzt werden kann. Die Drehachse des Mitnehmerrades ist mit einer Dämpfungsvorrichtung 13, 14, 15 verbunden, so dass Schwingungen in der Umlaufbewegung des Fördermittels gedämpft werden können.

Derartige Schwingungen treten vor allem bei langen Fördermitteln mit Gliedern geringer Steifigkeit auf. Diese weisen unter Eigenlast und insbesondere bei Zusatzlast in Zugrichtung des Antriebs eine niedrige Eigenfrequenz auf, die durch wechselnde Reibverhältnisse entlang der Kettenführung leicht zu Eigenschwingungen angeregt werden kann. Man spricht in diesem Zusammenhang auch von Stick-Slip-Schwingungen.

Die Dämpfungsvorrichtung der SU 1 488 216 A1 umfasst ein Flügelrad 10, das in einer zähen Flüssigkeit 14, beispielsweise Öl läuft, wobei die zähe Flüssigkeit in einer abgeschlossenen Kammer 13 aufgenommen ist.

Der Nachteil dieser Dämpfungsvorrichtung besteht darin, dass diese auch die erwünschte Förderbewegung des endlosen Fördermittels dämpft und nicht nur die unerwünschten Schwingungsbewegungen. Dementsprechend muss der Antrieb des Fördermittels unnötig leistungsstark ausgelegt werden. Gleichzeitig entsteht in der Dämpfungsvorrichtung eine große Menge an Reibungswärme, welche die Dämpfungsvorrichtung stark aufheizt, insbesondere wenn sich das Fördermittel mit hoher Geschwindigkeit bewegt.

Aus der EP 664 261 B1 ist ein weiterer Förderer bekannt. Hier wird die Stick-Slip-Schwingung durch eine große Dämpfungsmasse abgemildert. Hier tritt das oben geschilderte Problem bezüglich der Reibungswärme nicht auf. Der Nachteil dieser Dämpfungsvorrichtung besteht darin, dass die Dämpfungsmasse viel Platz benötigt.

Aus der DE 20 2008 014 206 U1 ist ein Förderer mit den Merkmalen des Oberbegriffs des Anspruchs 1 mit einem Fördermittel in Form einer Förderkette bekannt. Der Förderer weist mehrere Umlenkrollen für die Förderkette auf. Abseits des Förderabschnitts der Förderkette ist ein Kettenspanner vorgesehen, der von einem federbelasteten Umlenkrad für die Förderkette gebildet wird. Eine Dämpfung der Kettenschwingungen ist nicht vorgesehen. Insbesondere bewirkt der Kettenspanner keine entsprechende Dämpfung, da die Förderkette an dessen gesamten Umfang mit der gleichen Geschwindigkeit läuft.

Aus der GB 424 504 A ist ein Förder mit einem Fördermittel in Form eines Förderbandes bekannt. Der federbelastete Kettenspanner ist nunmehr am Ende des Förderabschnitts angeordnet. Er bewirkt ebenfalls keine Dämpfung der Förderbandschwingungen, da das Förderbande an dessen gesamten Umfang mit der gleichen Geschwindigkeit läuft.

Die Aufgabe der Erfindung besteht darin, einen Förderer mit einer Dämpfungsvorrichtung zu schaffen, bei der im Normalbetrieb keine zusätzliche Reibungswärme entsteht, wobei die Dämpfungsvorrichtung möglichst platzsparend aufgebaut ist. Hierbei soll die Dämpfungsvorrichtung insbesondere in einen Förderer entsprechend der Bauart der US 4 961 492 A in Verbindung mit einem Fördermittel gemäß der US 6 779 652 B2 integrierbar sein. Diese Aufgabe wird durch einen Förderer mit den Merkmalen des Anspruchs 1 gelöst.

Bei einem erfindungsgemäßen Förderer ist die Drehachse des Mitnehmerrades translationsbeweglich an dem Grundgestell gelagert, wobei die Dämpfungsvorrichtung eine Translationsbewegung der Drehachse dämpfen kann. Die Drehachse des Mitnehmerrades wird nur im Falle von Umlaufschwingungen des Fördermittels in eine Translationsbewegung versetzt, während sie im Normalbetrieb an einem festen Ort verbleibt. Demnach wird die Dämpfungsvorrichtung nur beim Auftreten von Schwingungen in Bewegung versetzt, so dass nur in diesem Fall zusätzliche Reibungsabwärme entsteht. Die Drehbewegung des Mitnehmerrades wird durch die vorgeschlagene Dämpfungsvorrichtung nicht gebremst, so dass der Antrieb des Förderers nicht unnötig belastet wird.

Bei einem erfindungsgemäßen Förderer weist das Fördermittel einen vom Förderabschnitt verschiedenen Rücklaufabschnitt auf, der im Wesentlichen parallel zum Förderabschnitt angeordnet ist, wobei das Mitnehmerrad zwischen dem Transport- und dem Rücklaufabschnitt angeordnet ist, wobei das Mitnehmerrad sowohl mit dem Transport- als auch mit dem Rücklaufabschnitt in Mitnahmeverbindung steht. Ein Förderer, dessen Fördermittel einen Rücklaufabschnitt aufweist, welches zum Förderabschnitt parallel verläuft, ist aus der oben bereits genannten US 4 961 492 A bekannt. Durch die vorgeschlagene Kopplung des Mitnehmerrades sowohl mit dem Förderabschnitt als auch mit dem Rücklaufabschnitt wird erreicht, dass sich die Drehachse des Mitnehmerrades translatorisch bewegt, wenn sich der Förder- und der Rücklaufabschnitt ungleich schnell bewegen. Genau dieser Fall tritt ein, wenn im Fördermittel Umlaufschwingungen auftreten, da sich aufgrund der Elastizität des Fördermittels nicht alle Abschnitte desselben gleich schnell bewegen. Die Dämpfungsvorrichtung bewirkt, dass sich der Geschwindigkeitsunterschied von Förder- und Rücklaufabschnitt vermindert, wodurch die Schwingung des Fördermittels gedämpft wird. Im Normalbetrieb des Förderers laufen der Förder- und der Rücklaufabschnitt gleich schnell, so dass sich die Drehachse des Mitnehmerrades nicht translatorisch bewegt, es kann sich daher ungehindert mit dem Fördermittel mitdrehen.

Bei einem erfindungsgemäßen Förderer umfasst die Dämpfungsvorrichtung eine Feder, über die sie am Grundgestell abgestützt ist. Mit der Feder kann eine Vorspannkraft in die Dämpfungsvorrichtung eingeprägt werden, so dass ein eventuell vorhandenes Spiel zwischen dem Fördermittel und dem Mitnehmerrad aufgehoben wird. Ein derartiges Spiel würde den Dämpfungseffekt der Dämpfungsvorrichtung massiv vermindern. In der vorgeschlagenen Dämpfungsvorrichtung müssen selbst keine Reibung erzeugende Mittel vorgesehen werden, da die Reibung zwischen Fördermittel und Grundgestell ausgenutzt wird, um eine Schwingungsdämpfung zu bewirken. Es ist vollständig ausreichend, wenn das erfindungsgemäße Mitnehmerrad in jedem Betriebszustand spielfrei sowohl mit dem Förder- als auch dem Rücklaufabschnitt bewegungsgekoppelt ist, was durch die vorgeschlagene Feder erreicht wird.

Bei einem erfindungsgemäßen Förderer ist das Mitnehmerrad zwischen zwei der wenigstens zwei Umlenkrollen angeordnet, so dass der Förder- und der Rücklaufabschnitt zu beiden Seiten des Mitnehmerrades parallel zueinandern verlaufen.

Bei einem bevorzugten Förderer ist die Feder über einen lageverstellbaren Anschlag am Grundgestell abgestützt. Das endlose Fördermittel wird durch den Betrieb des Förderers mit der Zeit verschlissen. Insbesondere bei Fördermitteln in Form einer Förderkette hat dieser Verschleiß eine allmähliche Verlängerung des Fördermittels zur Folge. Diese allmähliche Verlängerung kann durch den lageverstellbaren Anschlag ausgeglichen werden, so dass auch bei einem verschlissenen Fördermittel kein Spiel zwischen dem Mitnehmerrad und dem Fördermittel auftritt.

Bei einem bevorzugten Förderer ist die Drehachse des Mitnehmerrades mittels einer Linearführung translationsbeweglich am Grundgestell gelagert, wobei die Führungsrichtung der Linearführung im Wesentlichen parallel zum benachbarten Bereich des Förderabschnitts verläuft. Als Linearführung kommt besonders bevorzugt eine Gleitführung zum Einsatz. Die vorgeschlagene Ausrichtung der Linearführung stimmt im Wesentlichen mit der Schwingrichtung des umlaufenden Fördermittels überein, so dass die Dämpfungsvorrichtung eine größtmögliche Wirksamkeit aufweist. Darüber hinaus ist die vorgeschlagene Lagerung so Platz sparend, dass sie problemlos zwischen dem Förderabschnitt und dem Rücklaufabschnitt des Fördermittels angeordnet werden kann.

Bei einem anderen bevorzugten Förderer ist ein Hebelarm vorgesehen, der an einem ersten Ende drehbeweglich an dem Grundgestell gelagert ist, wobei an einem dem ersten gegenüberliegenden zweiten Ende das Mitnehmerrad drehbar aufgenommen ist, wobei die Dämpfungsvorrichtung die Drehbewegung des Hebelarms dämpft. Ein Hebelarm benötigt gegenüber der oben vorgeschlagenen Linearführung zwar mehr Platz, dafür ist seine Herstellung deutlich kostengünstiger. Darüber hinaus werden nur Drehlagerungen benötigt, die als kostengünstige und verschleißarme Normteile, beispielsweise in Form von Radialrillenkugellagern, erhältlich sind. Anzumerken ist, dass die Länge und die Ausrichtung des Hebels so gewählt werden sollte, dass sich die Drehachse des Mitnehmerrades wenigstens annähernd parallel zum benachbarten Bereich des Förderabschnitts bewegt.

Bei einem bevorzugten Förderer ist das Mitnehmerrad benachbart zu einem Antrieb des endlosen Fördermittels angeordnet. In der Nähe des Antriebs sind die Auswirkungen der Stick-Slip-Schwingung in Form der Geschwindigkeitsunterschiede zwischen Förder- und Rücklaufabschnitt des Fördermittels oft am größten, so dass der Dämpfer dort eine größtmögliche Wirkung entfaltet. Gleichzeitig wird der Antrieb durch die genannten Schwingungen besonders stark belastet, so dass die vorgeschlagene Anordnung des Mitnehmerrades die Belastungen des Antriebes vermindert und so dessen Lebensdauer verlängert.

Bei einem bevorzugten Förderer ist das endlose Fördermittel in Form einer Kette mit einer Vielzahl von gesonderten Kettengliedern ausgeführt, wobei die Kettenglieder je eine Transportplatte aufweisen, wobei die Transportplatten die Förderfläche definieren. Ein derartiger Förderer ist aus der US 4 961 492 A bekannt. Die Erfindung ist bei einem derartigen Förderer besonders vorteilhaft, weil dort die Stick-Slip-Schwingung besonders stark ist und weil dort eine besonders platzsparende Dämpfungsvorrichtung benötigt wird.

Bei einem besonders bevorzugten Förderer bestehen die Kettenglieder aus Kunststoff, wobei benachbarte Kettenglieder in wenigstens zwei Richtungen drehbeweglich miteinander verbunden sind. Eine derartige Förderkette ist aus der US 6 779 652 B2 bekannt. Derartige Förderketten unterliegen einem besonders hohen Verschleiß, so dass die vorgeschlagene Dämpfungsvorrichtung in Verbindung mit derartigen Förderketten besonders vorteilhaft ist.

Die Erfindung wird im Folgenden anhand der beigefügten Zeichnung näher erläutert. Es stellt dar:
Fig. 1 eine grobschematische Seitenansicht eines erfindungsgemäßen Förderers.

Fig. 1 zeigt einen erfindungsgemäßen Förderer 10. Der Förderer 10 umfasst ein endloses Fördermittel 20, von dem allerdings nur ein Teilbereich dargestellt ist. Das endlose Fördermittel 20 ist gemäß der US 6 779 652 B2 ausgeführt. Die

Demnach handelt es sich bei dem endlosen Fördermittel 20 um eine Förderkette, deren Kettenglieder 25 aus Kunststoff spritzgegossen sind. Jedes Kettenglied 25 besitzt eine im Wesentlichen ebene Transportplatte 26, wobei die Transportplatten 26 zusammen eine Förderfläche 21 definieren. Anzumerken ist, dass anstelle der ebenen Transportplatte 26 eine Vielzahl von anderen Transportplatten bekannt sind, deren Form in besonderer Weise an das zu transportierende Fördergut 11 angepasst ist.

Je zwei benachbarte Kettenglieder 25 sind über ein Drehgelenk 27 miteinander verbunden, welches zwei Drehfreiheitsgrade aufweist, so dass das Fördermittel 20 insgesamt beliebig gekrümmt im Raum verlaufen kann. Hierfür umfasst das Grundgestell 12 eine Reihe von (nicht dargestellten) Führungsmitteln für das Fördermittel 20 deren Ausgestaltung der US 4 961 492 A zu entnehmen ist.

An dem Grundgestell 12 ist neben der dargestellten Umlenkrolle 40 wenigstens eine weitere (nicht dargestellte) Umlenkrolle drehbar gelagert, wobei beide Umlenkrollen identisch ausgeführt sind. Die Umlenkrollen 40 besitzen eine Vielzahl von Zähnen 41, die formschlüssig in das Fördermittel 20 eingreifen, so dass eine Mitnahmeverbindung zwischen der Umlenkrolle 40 und dem Fördermittel 20 gegeben ist. Die dargestellte Umlenkrolle 40 ist überdies mit einem (nicht dargestellten) Antrieb in Form eines Elektromotors verbunden, so dass das Fördermittel 20 über die Umlenkrolle 40 so in Bewegung versetzt werden kann, dass es endlos umläuft.

Da das Fördermittel 20 endlos als in sich geschlossener Ring ausgeführt ist, besitzt es neben dem Förderabschnitt 22 mit der Förderfläche 21 einen Rückführabschnitt 24, der in weiten Teilen parallel zum Förderabschnitt 22 verläuft. Die entsprechende Führung der beiden Förderabschnitte 22; 24 des Fördermittels 20 wird beispielsweise mittels eines stranggepressten Aluminiumprofils realisiert, wobei der Förder- und der Rückführabschnitt 22; 24 an zwei gegenüberliegenden Seiten des Aluminiumprofils gleitend geführt sind.

Zwischen dem Förder- und dem Rückführabschnitt 22; 24 des Fördermittels 20 ist ein Mitnehmerrad 51 vorgesehen, das identisch zu den Umlenkrädern 40 ausgeführt ist. Das Mitnehmerrad 51 greift mit seinen Zähnen formschlüssig sowohl in den Förderals auch in den Rückführabschnitt 22; 24 des Fördermittels 20 ein, so dass mit beiden Abschnitten 22; 24 eine Mitnahmeverbindung besteht. Sofern sich der Förder- und der Rückführabschnitt 22; 24 gleich schnell bewegen, wird das Mitnehmerrad 51 hierdurch in eine reine Drehbewegung versetzt. Sobald Stick-Slip-Schwingungen im Fördermittel 20 auftreten, bewegen sich der Förder- und der Rückführabschnitt 22; 24 des Fördermittels 20 nicht mehr gleich schnell. Dies führt dazu, dass das Mitnehmerrad 51 zusätzlich zur Drehung translatorisch verlagert wird, und zwar parallel zum benachbarten Bereich 23 des Förderabschnitts 22 des Fördermittels 20. Damit diese Bewegung kontrolliert verläuft, ist die Drehachse 52 des Mitnehmerrades 51 in einer Linearführung 53 geradlinig beweglich aufgenommen, wobei die Führungsrichtung 54 der Linearführung 53 parallel zum benachbarten Bereich 23 des Förderabschnitts 22 des Fördermittels 20 verläuft. Als Linearführung 53 kommt bevorzugt eine Gleitführung zum Einsatz, deren Läufer 55 mit einem Drehlager ausgestattet ist, welches die Drehung des Mitnehmerrades 51 ermöglicht.

Der Läufer 55 ist wiederum über eine Feder 56 mit dem Grundgestell 12 verbunden. Die Feder 56 ist hierbei so stark vorgespannt, dass das Mitnehmerrad 51 unabhängig vom Schwingungszustand des Fördermittels 20 spielfrei in dieses eingreift. Um diesen Zustand auch nach längerem Betrieb des Förderers 10 aufrecht erhalten zu können, ist die Feder 56 an einem in Führungsrichtung 54 lageverstellbaren Anschlag am Grundgestell 12 abgestützt. Sobald am Fördermittel 20 Verschleiß auftritt, der sich als Verlängerung des Fördermittels 20 bemerkbar macht, wird der Anschlag so weit verstellt, dass die Feder 56 wieder genügend vorgespannt ist.

Besondere Reibung erzeugende Mittel sind in der Dämpfungsvorrichtung 50 nicht vorgesehen, da die eigentliche Schwingungsdämpfung durch die Reibung zwischen dem Fördermittel 20 und den zugeordneten Führungsbauteilen bewirkt wird.
- 10: Förderer
- 11: Fördergut
- 12: Grundgestell
- 20: Fördermittel
- 21: Förderfläche
- 22: Förderabschnitt
- 23: zum Mitnehmerrad benachbarter Bereich des Förderabschnitts
- 24: Rücklaufabschnitt
- 25: Kettenglied
- 26: Transportplatte
- 27: Drehgelenk
- 40: Umlenkrolle
- 41: Zahn
- 50: Dämpfungsvorrichtung
- 51: Mitnehmerrad
- 52: Drehachse
- 53: Linearführung
- 54: Führungsrichtung
- 55: Läufer
- 56: Feder
- 57: Anschlag

## Patentansprüche

1. Förderer (10) umfassend wenigstens ein endloses Fördermittel (20),
welches einen Förderabschnitt (22) mit einer Förderfläche (21) aufweist, auf der ein Fördergut (11) transportiert werden kann,
wobei das Fördermittel (20) an einem Grundgestell (12) über wenigstens zwei Umlenkrollen (40) gehalten ist, so dass es endlos umlaufen kann,
wobei ein Mitnehmerrad (51) mit einer Drehachse (52) vorgesehen ist, das derart mit dem Fördermittel (20) gekoppelt ist, dass es durch dieses in eine Drehbewegung versetzt werden kann,
wobei die Drehachse (52) des Mitnehmerrads (51) derart mit einer Dämpfungsvorrichtung (50) gekoppelt ist, dass Schwingungen der Umlaufbewegung des Fördermittels (20) gedämpft werden können, wobei
die Drehachse (52) des Mitnehmerrades (51) translationsbeweglich an dem Grundgestell (12) gelagert ist, wobei die Dämpfungsvorrichtung (50) eine Translationsbewegung der Drehachse (52) dämpfen kann, wobei die Dämpfungsvorrichtung (50) eine Feder umfasst, über die sie am Grundgestell (12) abgestützt ist, und wobei das Fördermittel (20) einen vom Förderabschnitt (22) verschiedenen Rücklaufabschnitt (24) aufweist, der im Wesentlichen parallel zum Förderabschnitt (22) angeordnet ist, **dadurch gekennzeichnet, dass** das Mitnehmerrad (51) zwischen dem Förder- und dem Rücklaufabschnitt (22; 24) angeordnet ist, wobei das Mitnehmerrad (51) sowohl mit dem Förder- (22) als auch mit dem Rücklaufabschnitt (24) in Mitnahmeverbindung steht,
und das Mitnehmerrad (51) zwischen zwei der wenigstens zwei Umlenkrollen (40) derart angeordnet ist, dass der Förder- und der Rücklaufabschnitt (22; 24) zu beiden Seiten des Mitnehmerrades (51) parallel zueinandem verlaufen.

2. Förderer nach Anspruch 1,
**dadurch gekennzeichnet, dass** die Feder über einen lageverstellbaren Anschlag am Grundgestell abgestützt ist.

3. Förderer nach einem der vorstehenden Ansprüche,
**dadurch gekennzeichnet, dass** die Drehachse (52) des Mitnehmerrades (51) mittels einer Linearführung (53) translationsbeweglich am Grundgestell (12) gelagert ist, wobei die Führungsrichtung (54) der Linearführung (53) im Wesentlichen parallel zum benachbarten Bereich (23) des Förderabschnitts (22) verläuft.

4. Förderer nach einem der vorstehenden Ansprüche,
**dadurch gekennzeichnet, dass** ein Hebelarm vorgesehen ist, der an einem ersten Ende drehbeweglich an dem Grundgestell (12) gelagert ist, wobei an einem dem ersten gegenüberliegenden zweiten Ende das Mitnehmerrad (51) drehbar aufgenommen ist, wobei die Dämpfungsvorrichtung (50) die Drehbewegung des Hebelarms dämpft.

5. Förderer nach einem der vorstehenden Ansprüche,
**dadurch gekennzeichnet, dass** das Mitnehmerrad (51) benachbart zu einem Antrieb des endlosen Fördermittels (20) angeordnet ist.

6. Förderer nach einem der vorstehenden Ansprüche,
**dadurch gekennzeichnet, dass** das endlose Fördermittel (20) in Form einer Kette mit einer Vielzahl von gesonderten Kettengliedern (25) ausgeführt ist, wobei die Kettenglieder (25) je eine Transportplatte (26) aufweisen, wobei die Transportplatten (26) die Förderfläche (21) definieren.

7. Förderer nach Anspruch 6,
**dadurch gekennzeichnet, dass** die Kettenglieder (25) aus Kunststoff bestehen, wobei benachbarte Kettenglieder (25) in wenigstens zwei Richtungen drehbeweglich miteinander verbunden sind.

## Claims

1. Conveyor (10), comprising at least one endless conveying means (20),
which has a conveying section (22) with a conveying surface (21), on which conveyed goods (11) can be transported,
wherein the conveying means (20) is held by way of at least two deflection rollers (40) on a base frame (12) in such a way that it can circulate endlessly;
wherein a driving wheel (51) having a rotary axle (52) is provided, and is coupled to the conveying means (20) in such a way that it can be set in a rotational motion by the said conveying means; wherein the rotary axle (52) of the driving wheel (51) is coupled to a damping device (50) in such a way that vibrations of the circulating motion of the conveying means (20) can be damped,
wherein the rotary axle (52) of the driving wheel (51) is mounted on the base frame (12) in a translatory-movable manner, wherein the damping device (50) can damp a translatory motion of the rotary axle (52), wherein the damping device (50) comprises a spring, by way of which it is supported on the base frame (12), and wherein the conveying means (20) has a return section (24) that differs from the conveying section (22) and is arranged substantially parallel to the conveying section (22), **characterized in that** the driving wheel (51) is arranged between the conveying section (22) and the return section (24), wherein the driving wheel (51) is connected in a driving manner to the conveying section (22) and to the return section (24),
and the driving wheel (51) is arranged between two of the at least two deflection rollers (40) in such a way that the conveying section (22) and the return section (24) run parallel to one another on either side of the driving wheel (51).

2. Conveyor according to Claim 1, **characterized in that** the spring is supported on the base frame by way of a positionally adjustable stop.

3. Conveyor according to one of the preceding claims, **characterized in that** the rotary axle (52) of the driving wheel (51) is mounted on the base frame (12) in a translatory-movable manner by means of a linear guide (53), wherein the guiding direction (54) of the linear guide (53) runs substantially parallel to the adjacent region (23) of the conveying section (22).

4. Conveyor according to one of the preceding claims, **characterized in that** a lever arm is provided, and at a first end is mounted in a rotatably movable manner on the base frame (12), wherein the driving wheel (51) is rotatably accommodated on a second end that is opposite from the first end, and wherein the damping device (50) damps the rotational motion of the lever arm.

5. Conveyor according to one of the preceding claims, **characterized in that** the driving wheel (51) is arranged adjacent to a drive of the endless conveying means (20).

6. Conveyor according to one of the preceding claims, **characterized in that** the endless conveying means (20) is configured in the form of a chain having a plurality of separate chain links (25), wherein the chain links (25) each have a transporting plate (26), wherein the transporting plates (26) define the conveying surface (21).

7. Conveyor according to Claim 6, **characterized in that** the chain links (25) consist of plastic, wherein adjacent chain links (25) are connected to one another such that they are rotatably movable in at least two directions.

## Revendications

1. Convoyeur (10) comprenant au moins un moyen de transport sans fin (20),
qui présente une section de transport (22) avec une face de transport (21), sur laquelle un produit à transporter (11) peut être transporté,
dans lequel le moyen de transport (20) est maintenu sur une charpente de base (12) par au moins deux rouleaux de renvoi (40), de telle manière qu'il puisse tourner sans fin,
dans lequel il est prévu une roue d'entraînement (51) avec un axe de rotation (52), qui est couplée au moyen de transport (20) de telle manière qu'il puisse être mis en mouvement de rotation au moyen de celle-ci,
dans lequel l'axe de rotation (52) de la roue d'entraînement (51) est couplé à un dispositif d'amortissement (50), de telle manière que des vibrations du mouvement de rotation du moyen de transport (20) puissent être amorties,
dans lequel l'axe de rotation (52) de la roue d'entraînement (51) est monté avec une mobilité de translation sur la charpente de base (12),
dans lequel le dispositif d'amortissement (50) peut amortir un mouvement de translation de l'axe de rotation (52),
dans lequel le dispositif d'amortissement (50) comprend un ressort, par lequel il prend appui sur la charpente de base (12), et
dans lequel le moyen de transport (20) présente une section de retour (24) différente de la section de transport (22), qui est essentiellement parallèle à la section de transport (22),
**caractérisé en ce que** la roue d'entraînement (51) est disposée entre les sections de transport et de retour (22; 24),
dans lequel la roue d'entraînement (51) se trouve en relation d'entraînement aussi bien avec la section de transport (22) qu'avec la section de retour (24) et la roue d'entraînement (51) est disposée entre deux desdits au moins deux rouleaux de renvoi (40), de telle manière que les sections de transport et de retour (22; 24) s'étendent parallèlement l'une à l'autre de part et d'autre de la roue d'entraînement (51).

2. Convoyeur selon la revendication 1, **caractérisé en ce que** le ressort prend appui sur la charpente de base au moyen d'une butée de position variable.

3. Convoyeur selon l'une quelconque des revendications précédentes, **caractérisé en ce que** l'axe de rotation (52) de la roue d'entraînement (51) est monté avec une mobilité de translation au moyen d'un guidage linéaire (53) sur la charpente de base (12), dans lequel la direction de guidage (54) du guidage linéaire (53) est essentiellement parallèle à la région voisine (23) de la section de transport (22).

4. Convoyeur selon l'une quelconque des revendications précédentes, **caractérisé en ce qu'**il est prévu un bras de levier, qui est monté par une première extrémité avec une mobilité de rotation sur la charpente de base (12), dans lequel la roue d'entraînement (51) est montée de façon rotative à une deuxième extrémité opposée à la première extrémité, dans lequel le dispositif d'amortissement (50) amortit le mouvement de rotation du bras de levier.

5. Convoyeur selon l'une quelconque des revendications précédentes, **caractérisé en ce que** la roue d'entraînement (51) est disposée à proximité d'un entraînement du moyen de transport sans fin (20).

6. Convoyeur selon l'une quelconque des revendications précédentes, **caractérisé en ce que** le moyen de transport sans fin (20) est réalisé sous la forme d'une chaîne avec une multiplicité d'éléments de chaîne distincts (25), dans lequel les éléments de chaîne (25) présentent chacun une plaque de transport (26), dans lequel les plaques de transport (26) définissent la face de transport (21).

7. Convoyeur selon la revendication 6, **caractérisé en ce que** les éléments de chaîne (25) sont constitués de matière plastique, dans lequel des éléments de chaîne voisins (25) sont reliés l'un à l'autre avec une mobilité de rotation dans au moins deux directions.
